(19) Europäisches Patentamt / European Patent Office / Office européen des brevets

(11) **EP 3 807 760 B1**

(12) **FASCICULE DE BREVET EUROPEEN**

(45) Date de publication et mention de la délivrance du brevet:
**13.09.2023 Bulletin 2023/37**

(21) Numéro de dépôt: **19740639.0**

(22) Date de dépôt: **06.06.2019**

(51) Classification Internationale des Brevets (IPC):
*G06F 9/455* (2018.01)   *G06F 9/50* (2006.01)
*H04L 41/0806* (2022.01)   *H04L 41/0895* (2022.01)
*H04L 41/40* (2022.01)   *H04L 43/0852* (2022.01)
*H04L 43/0876* (2022.01)   *H04L 43/20* (2022.01)
*H04L 41/0213* (2022.01)

(52) Classification Coopérative des Brevets (CPC):
**G06F 9/45558; G06F 9/5077; H04L 41/0806;
H04L 41/0895; H04L 41/40; H04L 43/0852;
H04L 43/0876; H04L 43/20;** H04L 41/0213

(86) Numéro de dépôt international:
**PCT/FR2019/051362**

(87) Numéro de publication internationale:
**WO 2019/243700 (26.12.2019 Gazette 2019/52)**

(54) **PROCÉDÉ D'INSTALLATION D'UNE FONCTION RÉSEAU VIRTUALISÉE**

VERFAHREN ZUM INSTALLIEREN EINER VIRTUELLEN NETZWERKFUNKTION

METHOD FOR INSTALLING A VIRTUAL NETWORK FUNCTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.06.2018 FR 1855333**

(43) Date de publication de la demande:
**21.04.2021 Bulletin 2021/16**

(73) Titulaire: **Orange**
**92130 Issy-les-Moulineaux (FR)**

(72) Inventeurs:
• **SLIM, Farah**
**92326 Châtillon Cedex (FR)**
• **FROMENTOUX, Gaël**
**92326 Châtillon Cedex (FR)**

(56) Documents cités:
**WO-A1-2017/002921      CN-A- 105 808 316
US-A1- 2017 094 377**

• **SLIM FARAH ET AL: "Towards a dynamic adaptive placement of virtual network functions under ONAP", 2017 IEEE CONFERENCE ON NETWORK FUNCTION VIRTUALIZATION AND SOFTWARE DEFINED NETWORKS (NFV-SDN), IEEE, 6 novembre 2017 (2017-11-06), pages 210-215, XP033264730, DOI: 10.1109/NFV-SDN.2017.8169880**
• **SLIM FARAH ET AL: "CLOSE: A costless service offloading strategy for distributed edge cloud", 2018 15TH IEEE ANNUAL CONSUMER COMMUNICATIONS & NETWORKING CONFERENCE (CCNC), IEEE, 12 janvier 2018 (2018-01-12), pages 1-6, XP033331884, DOI: 10.1109/CCNC.2018.8319276 cité dans la demande**

**Description**

## 1. Domaine de l'invention

La demande d'invention se situe dans le domaine des architectures de communication basées sur la mise en oeuvre de fonctions réseaux virtualisées dans des architectures distribuées.

## 2. Etat de la technique antérieure

Les infrastructures de communication sont aujourd'hui au coeur d'une transformation qui s'appuie sur des technologies émergentes telles que la virtualisation des fonctions réseaux (NFV) et qui consiste à découpler ces fonctions réseau des équipements physiques les mettant en oeuvre, utilisés dans les infrastructures actuelles. Les fonctions réseau virtualisées sont déployées dans des centres de données (*en anglais Data Centers*) sur des serveurs dits génériques, c'est-à-dire ne comprenant pas de caractéristiques spécifiques aux fonctions réseau. Les fonctions réseaux sont diverses et peuvent comprendre des fonctions telles qu'une S-GW (*en anglais Serving Gateway*), une PDN-GW (*en anglais Packet Data Network Gateway*), un MME (*en anglais Mobility Management Entity*), un NAT (*en anglais Network Address Translation*) ou bien encore de façon non limitative une fonction Pare-Feu (*en anglais Firewall*).

Le déploiement de services réseaux, mis en oeuvre à partir d'un ensemble de fonctions réseau virtualisées, implique le placement des fonctions réseau virtualisées (VNFs) dans des machines virtuelles (VMs), en prenant en compte les contraintes apportées par le contexte des réseaux de communications en termes de charge, de latence, de disponibilité des services.

En effet, les contraintes de certaines fonctions réseau, notamment sur le plan de données (S-GW, fonctions Radio Access Networks (RANs)), en termes de latence imposent de déployer ces fonctions près de l'utilisateur final. Ces contraintes ont ainsi incité les opérateurs des réseaux de communication à mettre à jour leurs infrastructures pour répondre à ces exigences, notamment en distribuant plus largement leurs centres de données pour être présents dans des Points de Présence (PoP) en bordure du réseau. Ces centres de données disséminés en bordure du réseau de communication ont le plus souvent des capacités limitées en termes de ressources (calcul, stockage des données et ressources d'accès), tout au moins au regard des grands centres de données déployés de façon centralisée par les principaux fournisseurs de données de l'Internet.

Il convient de prendre en compte les limites des centres de données distribués d'une part et les besoins des fonctions réseaux virtualisées d'autre part pour qu'un service, basé sur le chainage de fonctions virtualisées, dispose d'une qualité de service suffisamment bonne pour le client. L'installation de fonctions réseau virtualisées dans des centres de données doit donc prendre en compte les contraintes des centres de données et les besoins des fonctions réseau.

Les techniques d'optimisation ILP (*en anglais Integer Linear Programming*) décrites dans le document « On orchestrating virtual network functions » (In Network and Service Management (CNSM), 2015 11th International Conférence (pages 50-56*)*) proposent une solution au problème mais souffrent de problèmes de passage à l'échelle (*en anglais scalability*). En effet, la résolution du problème pour une infrastructure massivement distribuée, peut prendre des heures, ce qui ne correspond pas à au critère de réactivité propre aux infrastructures de communication.

L'installation des fonctions réseau virtualisées est le plus souvent mise en oeuvre de façon centralisée, notamment à partir d'un contrôleur qui choisit pour l'installation d'une fonction réseau virtualisée le centre de données qui a le plus de ressources disponibles dans une zone de disponibilité pré-définie. Pour prendre la décision d'installation, le contrôleur centralisé a donc besoin de garder une vue globale et à temps-réel des ressources disponibles dans l'infrastructure. Cela nécessite de remonter régulièrement des informations des ressources disponibles depuis les centres de données vers le contrôleur, ce qui occasionne la transmission de flux de « contrôle », ce qui peut potentiellement impacter l'écoulement des données des clients et impacter la qualité d'expérience de ceux-ci.

Un mécanisme de déflexion, notamment décrit dans le document « CLOSE: A Costless Service Offloading Strategy for Distributed Edge Cloud. GTCC 2017-IEEE Workshop on Game Theory in Computer Communications »*,* a été proposé pour qu'une fonction réseau virtualisée qui n'a pu être installée dans un centre de données soit défléchie dans un centre de données voisin. La sélection est seulement basée sur les possibilités de centres de données voisins de pouvoir accueillir des fonctions réseau virtualisées sans tenir compte des spécificités des fonctions réseau à installer. Notamment la compatibilité des fonctions dans un centre de données tel qu'identifié dans le document (Network Functions Virtualisation (NFV) Release 2; Management and Orchestration; Network Service Templates Specification] (http://www.etsi.org/deliver/etsi_gs/NFV-IFA/001_099/014/02.01.01_60/gs_NFV-IFA014v020101p.pdf - date:10/2016) n'est pas prise en compte.

Le document publié le 6 novembre 2017 par Farah SLIM et AL, intitulé "Towards a dynamic adaptive placement of virtual network functions under ONAP", pages 210-215, DOI: 10.1109/NFV-SDN.2017.8169880 décrit une stratégie d'allocation de ressources pour déployer des fonctions réseau virtualisées (VNFs) dans des centres de données distribués.

Le document WO 2017/002921 A1 décrit une solution permettant de réduire la complexité d'une opération quand une allocation de ressource pour une fonction réseau virtualisée (VNF) ou une machine virtuelle (VM) échoue.

La présente invention a pour objet de remédier à ces inconvénients.

## 3. Exposé de l'invention

L'invention est spécifiée par les revendications indépendantes annexées. En outre, des modes de réalisation préférés sont définis par les revendications dépendantes.

L'invention vient améliorer la situation à l'aide d'un procédé d'installation d'une fonction réseau, contribuant à l'implémentation d'un service de communications, dans un centre de données d'un ensemble de centres de données d'une architecture virtualisée de communications, comprenant les étapes suivantes mise en oeuvre dans une entité d'exploitation du service:

- Emission à destination d'une entité de gestion des profils d'un message d'obtention d'un ensemble de paramètres de placement de la fonction réseau virtualisée propres au type de ladite fonction réseau virtualisée, l'ensemble étant appelé profil, ledit message comprenant un identifiant de ladite fonction réseau virtualisé

- Obtention, en provenance de l'entité de gestion des profils d'un profil correspondant au type de ladite fonction réseau virtualisée

- Détermination d'un premier centre de données adapté à ladite fonction réseau virtualisée à installer en fonction du profil obtenu

- Modification du profil par l'ajout d'une donnée d'identification du premier centre de données déterminé,

- Emission à destination d'une entité d'administration de l'architecture virtualisée d'une requête d'installation, comprenant le profil modifié, de la fonction réseau virtualisée dans le premier centre de données déterminé

- Détermination d'un deuxième centre de données de l'ensemble en fonction du profil modifié pour installer la fonction réseau virtualisée à la suite de la réception, en provenance de l'entité d'administration de l'architecture virtualisée, d'un message comprenant une information de non-installation de la fonction réseau virtualisée dans le premier centre de données.

Un service est composé d'un ensemble de fonctions réseau virtualisées qui sont chaînées les unes avec les autres. Pour assurer une bonne qualité et une disponibilité satisfaisante du service, il est nécessaire d'installer une fonction réseau dans un centre de données (*en anglais data center*) adapté à la fonction réseau et au service mis en oeuvre. L'adaptation du centre de données adéquat pour la fonction à installer ne dépend pas seulement de la caractéristique de la fonction, qui peut être identifiée par une description de la fonction, mais également de paramètres complémentaires relatifs au type de fonction. Le procédé d'installation permet avantageusement de tirer parti d'un profil de placement permettant à l'entité d'exploitation de service de sélectionner le centre de données en fonction des paramètres présents dans le profil. L'entité de gestion des profils intervient dans l'installation d'une fonction en enrichissant le procédé d'installation et en évitant par exemple la surcharge d'un centre de données ou la concentration des fonctions réseau contribuant à un service spécifique dans un unique centre de données ou au contraire à exclure cette concentration selon des règles d'affinités propres aux types fonctions réseaux virtualisées. Des fonctions virtualisées différentes peuvent avoir un même profil si ces fonctions sont de même type, c'est-à-dire qu'elles ont des caractéristiques ou des besoins intrinsèques (latence, performance, disponibilité, débit maximum...) équivalentes ou proches. Le profil de placement, associé à une fonction réseau dans une infrastructure virtualisée spécifique, assure donc une meilleure disponibilité du service par une adaptation du centre de données sélectionné au type de fonction réseau à installer.

Le procédé d'installation comprend en outre la détermination d'un deuxième centre de données de l'ensemble, suite à la réception, en provenance de l'entité d'administration de l'architecture virtualisée, d'un message comprenant une information de non-installation de la fonction virtualisée dans le premier centre de donnée.

Dans le cas où l'installation ne peut pas se réaliser dans le premier centre de données déterminé, l'entité d'administration de l'infrastructure virtualisée informe l'entité d'exploitation de service que l'installation n'a pu être réalisée de façon à ce qu'un deuxième centre de données soit sélectionné pour l'installation de la fonction. Cela permet d'améliorer le taux de réussite d'installation d'une fonction virtualisée et d'éviter qu'une fonction virtualisée soit installée dans un centre de données qui ne pourrait finalement pas l'accueillir. La présence de l'information sur le premier centre de données dans le profil modifié permet d'éviter de sélectionner le même centre de données sans devoir mémoriser les centres de données déterminés dans l'entité d'exploitation du service.

Selon un autre aspect de l'invention, dans le procédé d'installation, l'entité d'exploitation incrémente un compteur, indiquant le nombre de fois où une installation d'une fonction virtualisée n'a pu être réalisée, dans le profil lors de la réception du message comprenant l'information de non-installation.

L'incrémentation d'un compteur dans le profil permet à l'entité d'exploitation de connaître le nombre de fois où l'entité d'administration de l'architecture virtualisée n'a pas installé la fonction virtualisée de façon à pouvoir gérer le délai d'installation et au besoin, en fonction de la fonction virtualisée par exemple, décider d'une stratégie d'installation d'urgence.

Selon un autre aspect de l'invention, dans le procédé d'installation, l'entité d'exploitation du service émet un message d'incident d'installation à une entité d'administration des services si le compteur atteint une valeur déterminée.

Si une installation ne peut avoir lieu au bout d'un nombre déterminé de tentatives, il est avantageux d'en informer une entité d'administration, par exemple un serveur BSS (*en anglais Business Support System*) pour que celui-ci motive la création de nouvelles capacités dans les centres de données ou de nouveaux centres de données.

Selon un autre aspect de l'invention, dans le procédé d'installation, le deuxième centre de données est dans la même zone géographique que le premier centre de données.

Il est nécessaire pour certaines fonctions virtualisée de les installer au plus près des clients utilisant le service auquel contribue ces fonctions virtualisées, notamment pour ne pas impacter la qualité de service ou parce que la fonction virtualisée traite un gros volume de données. La détermination d'un deuxième centre de données proche du premier permet de s'assurer que le service est mis en oeuvre avec une qualité de service aussi satisfaisante que si le premier centre de données avait accueilli la fonction virtualisée.

Selon un autre aspect de l'invention, dans le procédé d'installation, le profil de placement obtenu auprès de l'entité de gestion des profils comprend une donnée de compatibilité entre types de fonctions virtualisées.

Des types de fonctions virtualisées ne doivent pas être co-localisés avec d'autres types de fonctions virtualisées, soit pour assurer une disponibilité du service en cas de problème du centre de données, soit pour qu'un centre de données ne concentre pas de types de fonctions virtualisées requérant simultanément beaucoup de ressources physiques, notamment des ressources physiques de même nature.

La donnée de compatibilité est ainsi prise en compte par l'entité d'exploitation de service pour déterminer un centre de données compatible avec les contraintes de la fonction virtualisée à installer.

Selon un autre aspect de l'invention, dans le procédé d'installation, le profil obtenu de l'entité de gestion des profils comprend un paramètre de temps indiquant la durée maximale à respecter pour l'installation de la fonction virtualisée.

Le paramètre de temps indiquant la durée maximale à respecter pour le type de fonction virtualisée à installer permet avantageusement de pouvoir informer les différentes entités impliquées dans l'installation de la fonction virtualisée sur la durée limite au-delà de laquelle l'installation de la fonction virtualisée ne doit pas être réalisée et consécutivement, d'indiquer aux entités des priorités dans les installations de fonctions virtualisées en fonction du paramètre de temps.

Selon un autre aspect de l'invention, dans le procédé d'installation, le profil obtenu de l'entité de gestion des profils comprend une caractéristique relative aux capacités requises pour l'installation de la fonction virtualisée.

Les différents types de fonctions virtualisées présentent des caractéristiques très différentes en termes de qualité de service, traitement des données, puissance de calcul et le choix d'un centre de données ou un autre peut être avantageusement conditionné par ces caractéristiques.

Selon un autre aspect de l'invention, dans le procédé d'installation, la donnée d'identification du premier centre de données déterminé comprend en outre une donnée d'identification de machine virtuelle sur laquelle la fonction virtualisée doit être installée.

Dans certains cas, notamment si les centres de données sont gérés plus précisément par exemple par machine virtuelle, il peut être avantageux de déterminer la machine virtuelle au sein d'un centre de données de façon à s'assurer que la machine virtuelle est bien adaptée au type de fonction virtualisée à installer.

Selon un autre aspect de l'invention, le procédé d'installation comprend en outre une étape de réception d'un message de déplacement de fonction virtualisée en provenance d'une entité d'administration de l'architecture virtualisée, préalablement à l'étape d'obtention d'un profil de placement.

Le procédé peut être mis en oeuvre pour une installation initiale de fonction virtualisée ou bien pour le déplacement d'une fonction virtualisée d'un premier centre de données vers un deuxième centre de données, parce que le premier centre de données n'est plus adapté au type de la fonction virtualisée ou qu'il est en maintenance ou bien encore pour améliorer le placement de la fonction virtualisée en fonction de son type.

Les différents aspects du procédé d'installation qui viennent d'être décrits peuvent être mis en oeuvre indépendamment les uns des autres ou en combinaison les uns avec les autres.

L'invention concerne également un dispositif d'installation d'une fonction réseau virtualisée, contribuant à l'implémentation d'un service de communications, dans un centre de données d'un ensemble de centres de données d'une architecture virtualisée de communications, mis en oeuvre dans une entité d'exploitation du service et comprenant:

- Un émetteur, apte à émettre à destination d'une entité de gestion des profils un message d'obtention d'un ensemble de paramètres de placement de la fonction réseau virtualisée propres au type de ladite fonction réseau virtualisée, l'ensemble étant appelé profil, ledit message comprenant un identifiant de ladite fonction réseau virtualisée,

- Un module d'obtention, en provenance de l'entité de gestion des profils d'un profil correspondant au type de ladite fonction réseau virtualisée, l'ensemble étant appelé profil, auprès d'une entité de gestion des profils,

- Un module de détermination, destiné à déterminer un premier centre de données adapté à ladite fonction réseau virtualisée à installer en fonction du profil obtenu,

- Un module de modification, apte à modifier le profil par l'ajout d'une donnée d'identification du premier centre de données déterminé,

- Un émetteur, apte à émettre à destination d'une entité d'administration de l'architecture virtualisée une requête d'installation, comprenant le profil modifié, de la fonction réseau virtualisée dans le premier centre de données déterminé,

- Un module de détermination, apte à déterminer un deuxième centre de données de l'ensemble en fonction du profil modifié pour installer ladite fonction réseau virtualisée à la suite de la réception, en provenance de l'entité d'administration de l'architecture virtualisée, d'un message comprenant une information de non-installation de la fonction réseau virtualisée dans le premier centre de données.

Ce dispositif est apte à mettre en oeuvre dans tous ses modes de réalisation le procédé d'installation qui vient d'être décrit.

L'invention concerne aussi un système d'installation d'une fonction réseau virtualisée, contribuant à l'implémentation d'un service, dans un centre de données d'un ensemble de centres de données d'une architecture virtualisée de communications, comprenant:

- Un dispositif d'installation tel que mentionné ci-dessus,
- Une entité de gestion des profils,
- Une entité d'administration de l'architecture virtualisée apte à recevoir du dispositif d'installation une requête d'installation, comprenant le profil modifié, de la fonction réseau virtualisée dans un premier centre de données déterminé, et apte à émettre un message comprenant une information de non-installation de la fonction réseau virtualisée dans le premier centre de données.

L'invention concerne aussi un programme d'ordinateur comprenant des instructions pour la mise en oeuvre des étapes du procédé d'installation qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions du programme d'ordinateur tel que mentionné ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

## 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :

- la figure 1 présente une vue simplifiée d'une architecture virtualisée de communications dans laquelle est mis en oeuvre un mode de réalisation de l'invention,

- la figure 2 présente un aperçu du procédé d'installation d'une fonction virtualisée selon un premier mode de réalisation de l'invention,

- la figure 3 présente un aperçu du procédé d'installation selon un deuxième mode de réalisation de l'invention,

- la figure 4 présente un exemple de structure d'un dispositif de xxx selon un aspect de l'invention.

**5. Description détaillée d'au moins un mode de réalisation de l'invention**

Dans la suite de la description, on présente des exemples de plusieurs modes de réalisation de l'invention dans une infrastructure de communication virtualisée basée essentiellement sur les spécification de l'organisme ETSI (*en anglais European Telecommunication Standards Institute*) et plus spécifiquement par le groupe NFV ISG (*en anglais Network Functions Virtualisation Industry Spécification Group*) mais l'invention peut également être mise en oeuvre dans d'autres types d'architectures virtualisées.

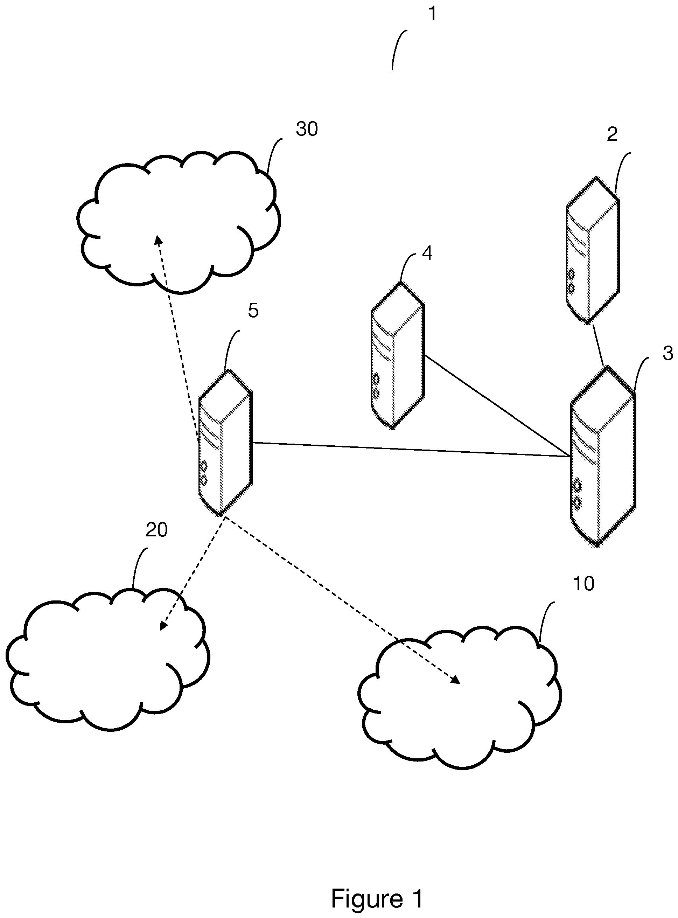

On se réfère tout d'abord à la **figure 1** qui présente une vue simplifiée architecture virtualisée de communications dans laquelle est mis en oeuvre un mode de réalisation de l'invention.

L'architecture 1 virtualisée de communications peut être un réseau de télécommunications, un réseau d'entreprise ou tout type d'infrastructure supportant l'établissement de communications entre terminaux ou entre terminaux et serveurs. L'architecture 1 peut être un réseau local, régional, national ou international.

Au sein de cette architecture 1 virtualisée, trois centres 10, 20, 30 de données sont déployés. Pour la bonne lecture de la figure 1, seuls trois centres 10, 20, 30 ont été représentés mais l'infrastructure 1 peut en comprendre un plus grand nombre. Ces centres de données (*en anglais data centers*) comprennent des équipements physiques ou serveurs, comprenant des machines virtuelles qui permettent de mettre en oeuvre plusieurs environnement d'exécution sur un même équipement physique. Cela permet d'avoir des équipements physiques non-spécifiques pouvant accueillir des fonctions installées sur les différentes machines virtuelles de l'équipement physique. On dit alors que les fonctions sont virtualisées car déployées sur des machines virtuelles supportées par des équipements physiques. Le gestionnaire de l'architecture 1 a la possibilité d'installer des fonctions virtualisées dans l'un des trois centres 10, 20, 30 de données de l'architecture 1. Les fonctions virtualisées peuvent indifféremment être des fonctions de traitement de données (parefeu, translation d'adresses IP (*en anglais Internet Protocol*), interception légale...), des fonctions relatives à un réseau mobile (composant MME (*en anglais Mobility Management Entity*), HSS (*en anglais Home Subscriber Server*), S/PGW (*en anglais Servicing/Packet Gateway*), routeur ou tout type de fonction à mettre en oeuvre pour acheminer des données.

En fonction du volume de données qu'elles ont à traiter, du besoin de redondance de ces fonctions, de leur criticité dans la fourniture de service, leur installation dans l'un ou l'autre des centres 10, 20, 30 de données doit être adapté. Un dispositif 2 d'administration des services et des opérations est ainsi déployé dans l'architecture 1. Ce dispositif peut par exemple être un serveur OSS/BSS (*en anglais operations support system/business support system*). Ce dispositif 2 transmet régulièrement des instructions d'installation (ou de placement) de fonction virtualisée à l'entité 3 d'exploitation du service. L'entité 3 est par exemple un serveur NFVO (*en anglais Network Functions Virtualization Orchestrator*) qui gère le cycle de vie des services et qui gère les services élaborés à partir des différentes fonctions virtualisées. L'entité 4 de gestion des profils assure l'association des profils aux fonctions virtualisées et transmet les profils à l'entité 3. L'entité de gestion des profils peut être une entité spécifique ou bien elle peut être déployée dans un autre serveur, par exemple de type VNFM (*en anglais virtual network function manager*).

L'entité 5 est une entité d'administration de l'architecture 1 virtualisée dont le rôle est d'installer les fonctions virtualisées dans les centres de données conformément à l'information présente dans le profil de placement transmis par l'entité 4 de gestion. Cette entité 5 peut par exemple être une entité VIM (*en anglais Virtualized Infrastructure Manager*) en charge de l'administration des ressources de l'architecture 1. L'installation effective d'une fonction virtualisée dans un des trois centres 10, 20, 30 de données est pilotée par l'entité 3, sur demande du dispositif 2, sur recommandation de l'entité 4 en transmettant une instruction vers l'entité 5.

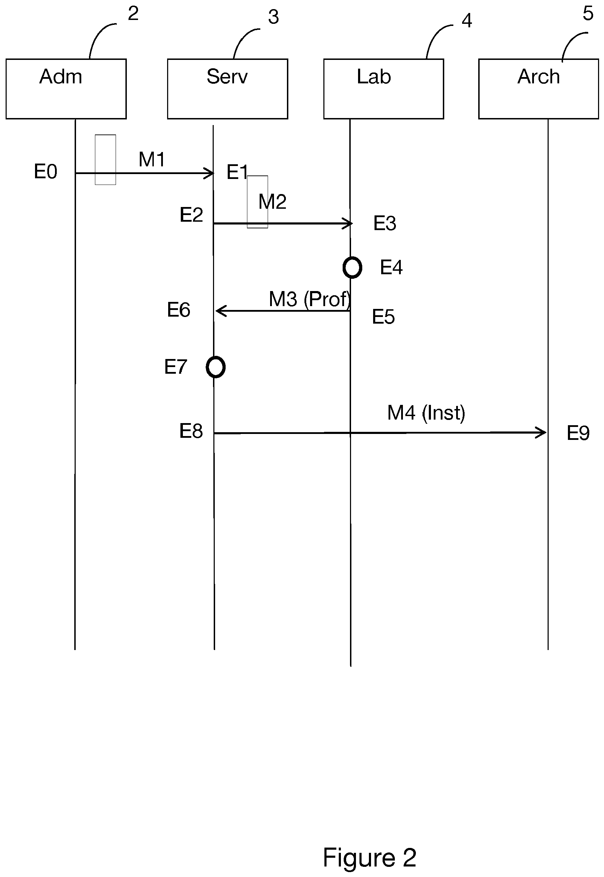

En relation avec la **figure 2**, on présente un aperçu des premières étapes du procédé d'installation d'une fonction réseau virtualisée.

Lors d'une étape E0, le dispositif 2 d'administration des services et des opérations transmet à l'entité 3 d'exploitation des services une instruction d'installation d'une fonction virtualisée dans un message M1. Le dispositif d'administration des services transmet une telle requête, soit parce qu'une personne a configuré sur le dispositif d'administration un nouveau service à déployer, soit parce qu'un service existant requiert l'installation d'une nouvelle fonction virtualisée, soit parce que le dispositif d'administration a reçu une commande d'une autre entité. Le besoin d'installation d'une nouvelle fonction virtualisée peut naitre de différentes raisons gérées par le dispositif 2. Par exemple, le dispositif 2 transmet à l'entité 3 d'exploitation des services une instruction d'installation d'une fonction virtualisée de filtrage suite à un problème de performances sur les fonctions virtualisées déjà installées. Le message M1 peut être indifféremment un message de type Openflow, SNMP ou basé sur tout type de protocole permettant de transmettre une telle instruction.

A la réception du message M1 lors de l'étape E1, l'entité 3 d'exploitation sollicite l'entité 4 de gestion des profils pour obtenir un profil correspondant au type de la fonction virtualisée à installer. Des fonctions virtualisées distinctes peuvent en effet avoir des caractéristiques en commun et consécutivement partager le même profil car elles sont de même type. Ainsi des fonctions virtualisées des besoins en terme de latence, de performance et/ou de disponibilité peuvent correspondre à un même type de fonction virtualisée. L'entité 3 transmet lors de l'étape E2 un message M2 comprenant un identifiant de la fonction virtualisée afin d'obtenir un profil correspondant à cette fonction virtualisée. Ce message M2 peut comprendre d'autres informations (criticité de la fonction, performances requises...) pour sélectionner le profil le plus adapté au type de la fonction virtualisée. L'entité 4 de gestion des profils, à la réception du message M2 lors de l'étape E3, détermine lors de l'étape E4 un profil correspondant au type de la fonction à installer. Cette détermination peut par exemple consister à l'utilisation d'une base de données associant des fonctions virtualisées, des types de fonction associés et possiblement d'autres informations (performances, criticité...) relatives à des profils de placement. Une fois le profil déterminé, l'entité 4 de gestion des profils transmet celui-ci dans un message M3 (Prof) lors de l'étape E5 à l'entité 3 en ayant fait la demande.

Selon une alternative, le profil obtenu peut notamment comprendre une donnée de compatibilité entre fonctions virtualisées. Cette donnée peut être par exemple un paramètre associé à chaque fonction virtualisée prenant en compte possiblement les informations de performance, de criticité... et informant l'entité 3 d'exploitation sur les contraintes de placement. Par exemple une fonction virtualisée avec une donnée de compatibilité positionnée à 1 ne devra pas être co-localisée avec une fonction virtualisée dont le profil comprend une donnée de compatibilité positionné à 2, par exemple pour éviter des problèmes de performance dans le centre de données qui accueillerait ces deux fonctions virtualisées.

Selon une autre alternative, le profil obtenu peut en outre comprendre un paramètre de temps permettant de fixer une urgence ou non à installer la fonction virtualisée. Par exemple, s'il s'agit d'une nouvelle fonction de filtrage en vue de répondre à un problème de sécurité survenu sur l'architecture virtualisée, il y a une urgence à installer cette fonction virtualisée et le paramètre de temps qui peut correspondre à un temps en secondes devra être respecté par l'entité 3, quitte à choisir une localisation du centre de données moins pertinente mais permettant une installation plus rapide respectant le paramètre de temps. A l'inverse un paramètre de temps moins exigeant pour une fonction virtualisée permet de sélectionner un centre de données mieux positionné.

Le profil, optionnellement, peut en outre comprendre une caractéristique relative aux capacités requises pour l'installation de la fonction virtualisée. Ainsi, l'entité 4 de gestion des profils, peut indiquer à l'entité 3 les capacités requises pour l'installation de la fonction virtualisée et de mieux sélectionner le centre de données.

A la réception du message M3 lors de l'étape E6, l'entité 3 d'exploitation des services est en mesure de déterminer lors de l'étape E7 un centre de données correspondant au profil transmis par l'entité de gestion des profils. L'entité 3 détermine lors de l'étape E7 un centre de données dans lequel la fonction virtualisée peut être installée. Pour assurer cette détermination, l'entité connait un ensemble de centres de données, leur localisation et leur taux d'occupation par exemple à partir d'informations transmises régulièrement par ces centres de données ou par une entité en charge de ceux-ci. L'entité 3 détermine le centre de données en fonction des informations du profil et des informations sur les centres de données. Dans le cadre d'un déploiement initial par exemple, l'entité 3 peut décider d'une installation sans requérir d'informations sur l'occupation des centres de données. Selon une alternative, l'entité 3 peut déterminer plus spécifiquement la machine virtuelle sur laquelle l'installation doit être installée, requérant une connaissance plus précise des centres de données et des machines virtuelles déployées dans ces centres de données.

Lors de l'étape E7 de détermination, l'entité 3 d'exploitation des services modifie le profil obtenu de l'entité 4 de gestion des profils en indiquant dans le profil le centre de données déterminé, ainsi que possiblement la machine virtuelle du centre de données, où la fonction virtualisée doit être installée.

Lors de l'étape E8 l'entité d'exploitation des services émet un message M4 (Inst) de requête d'installation à destination de l'entité 5 d'administration de l'architecture virtualisée. Cette instruction comprend le profil modifié, ce profil modifié comprenant l'identification du centre de données, ainsi que possiblement la machine virtuelle, où installer la fonction virtualisée. A la réception du message M4 lors de l'étape E9, l'entité 5 d'administration de l'architecture est en mesure d'installer la fonction virtualisée dans le centre de données identifié. L'identification du centre de données peut correspondre à un enregistrement DNS (*en anglais Domain Name System*) ou à tout type d'identifiant dont la signification est aussi bien connue de l'entité 3 que de l'entité 4. La machine virtuelle, dans le cas où elle est aussi identifiée dans l'instruction, peut être identifiée à partir d'une adresse IP ou d'un enregistrement DNS.

L'installation de la fonction virtualisée est ensuite réalisée par l'entité 5 d'administration de l'infrastructure de façon non modifiée par rapport aux solutions existantes, telles que par exemple définies par l'organisme ETSI. Un dispositif du centre de données déterminé peut ainsi télécharger la fonction virtualisée et l'installer sur une machine virtuelle du centre de données ou bien sur la machine virtuelle déterminée du centre de données.

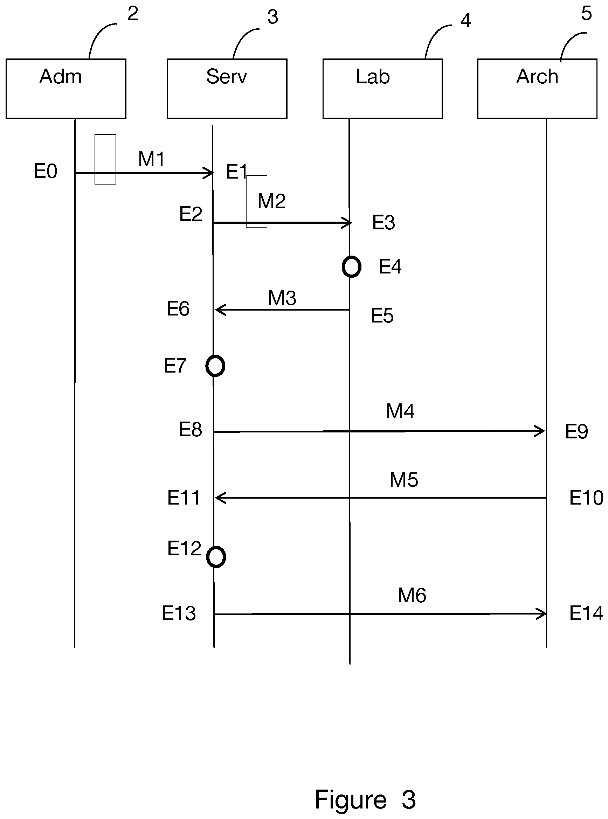

On se réfère maintenant à la **figure 3** qui présente un aperçu du procédé d'installation selon un mode de réalisation de l'invention,

Les étapes E0 à E9 de ce mode de réalisation sont identiques à celles décrites ci-avant en relation avec la figure 2.

Lors de l'étape E10, l'entité 5 d'administration émet un message M5 de non-installation de la fonction virtualisée dans le centre de données indiqué dans le message M4. Cette non-installation peut avoir plusieurs raisons : le centre de données ne peut être identifié, le centre de données ne peut accueillir de nouvelles fonctions virtualisées, la fonction virtualisée à installer n'est pas compatible avec les exigences du centre de données. Dans le cas où la machine virtuelle est aussi indiquée dans le message, et dans le cas où la machine virtuelle identifiée ne peut accueillir la fonction virtualisée, l'entité 5 peut installer la fonction virtualisée sur une autre machine virtuelle du centre de données ou bien indiquer à l'entité 3 que l'installation ne peut être réalisée de façon conforme à l'instruction d'installation reçue.

A la réception du message M5 lors de l'étape E11, l'entité 3 d'exploitation des services incrémente un compteur dans le profil. Le compteur peut, selon une alternative, être positionné à 0 lors de l'envoi du profil par l'entité de gestion des profils puis ensuite incrémenté de 1 chaque fois qu'une installation de la fonction virtualisée associée au profil ne peut être réalisée par l'entité 5 d'administration de l'infrastructure. L'incrémentation du compteur à chaque non-installation permet à l'entité 3 d'exploitation des services de décider d'une stratégie à partir d'un certain nombre de non-installations d'une fonction virtualisée donnée. Cela peut par exemple consister à informer une entité d'administration du problème d'installation d'une fonction virtualisée en transmettant un message d'incident ou bien de déterminer un centre de données par défaut, déployé pour pouvoir accepter nécessairement la fonction virtualisée.

A la réception du message M5, l'entité d'exploitation des services doit en outre déterminer, lors de l'étape E12, un autre centre de données où la fonction virtualisée doit être installée. Selon une alternative, elle peut à nouveau solliciter l'entité de gestion des profils pour obtenir un nouveau profil associé à la fonction virtualisée. Selon une autre alternative, elle peut déterminer elle-même un autre centre de données pour le profil transmis initialement. Optionnellement, elle peut notamment sélectionner un centre de données correspondant au profil et se trouvant dans la même zone géographique que le premier centre de données déterminé lors de l'étape E7. La sélection d'un centre de données proche géographiquement du premier centre de données est importante notamment pour les fonctions virtualisées préférablement localisées près des clients. Par exemple, une fonction virtualisée de SGW est préférablement localisée à proximité des clients et la localisation géographique est à prendre en compte dans la détermination du nouveau centre de données lors de l'étape E12.

Une fois le nouveau centre de données, et possiblement la nouvelle machine virtuelle déterminée, l'entité 3 transmet lors de l'étape E13 un message M6 d'instruction d'installation à l'entité 5 d'administration de l'architecture. L'entité 5 installe la fonction virtualisée associée au profil. Ces étapes correspondent aux étapes E8 et E9. Dans le cas d'une nouvelle non-installation, les étapes E11 à E14 sont réitérées autant de fois que nécessaire, c'est-à-dire jusqu'à ce que l'entité 5 installe la fonction virtualisée ou bien jusqu'à ce que l'entité 3 stoppe le procédé d'installation en raison du trop grand nombre d'échecs d'installation de la fonction virtualisée.

Le procédé d'installation est également adapté au déplacement de fonctions virtualisées d'un centre de données à un autre. Dans ce cas, le dispositif 2 d'administration reçoit un message de déplacement d'une fonction virtualisée en provenance de l'entité d'administration de l'architecture virtualisée. Ce message peut comprendre notamment le centre de données dans lequel la fonction virtualisée est actuellement installée pour éviter de proposer une installation dans le même centre de données. Alternativement, l'entité 3 d'exploitation des services peut éviter de déterminer le centre de données dans lequel la fonction virtualisée est actuellement installée en utilisant une base de données.

Ce procédé peut être mis en oeuvre dans un système comprenant un plus grand nombre d'entités impliquées dans le procédé, en fonction notamment de la taille de l'architecture. Plus particulièrement, l'entité 3 d'exploitation des services peut interagir avec plusieurs entités 5 d'administration d'architecture virtualisée.

Un exemple de mise en oeuvre de l'invention dans le contexte d'un réseau mobile de type vEPC (*en anglais Virtualized Evolved Packet Core*) est présenté ci-dessous. Dans cette solution, on se propose de définir un profil qui va renseigner toutes les contraintes de placement de fonction réseau virtualisée (VNFs). Ce profil est défini en fonction du type de VNF étant donné que toutes les VNFs n'ont pas les mêmes contraintes.

En effet, une VNF est en général composé de plusieurs composants (également appelé sous-fonctions ou microservices), qui exécutent des tâches situés à différents niveaux fonctionnels du réseau, certains faisant partie du plan de données, tandis que d'autres font partie du plan de contrôle du réseau.

Les composants MME (*en anglais Mobility Management Entity*) et HSS (*en anglais Home Subscriber Server*) doivent être exécutés sur le plan de contrôle. Les composants S/PGW (*en anglais Servicing/Packet Gateway*) doivent être déployés sur le plan de données. Les composants du plan de données peuvent présenter des exigences strictes en termes de latence pour éviter d'introduire des retards dans la livraison des données. Les composants du plan de contrôle sont plus tolérants en termes de latence. Il est donc nécessaire de définir le paramètre latence dans le profil qui dépend du type du VNF (ici le type est associé au plan de contrôle ou au plan de données, chaque plan ayant des contraintes qui lui est propre).

L'origine de la VNF doit être connue durant le processus du placement avec déflexion. Il est donc nécessaire de définir le paramètre « origine », ce qui va permettre d'éviter les boucles (défléchir une VNF entre les deux mêmes centres de données plusieurs fois). Certaines VNFs ont des contraintes d'affinité/non affinité. Ces règles établissent la relation entre les VNFs et les centres de données (certains composants ne doivent pas être exécutés dans le même centre de données par exemple. Il est proposé un paramètre « affinité » qui consiste à une liste de centre de données qui sont éligibles pour le placement de la VNF en respectant ses contraintes.

Un nombre maximum de déflexions au-delà duquel les performances en termes de temps de réponse de la VNF commencent à se dégrader est nécessaire au cours du processus de placement des VNFs. Ce paramètre est également défini en fonction du type de la VNF.

Un paramètre TTL (*en anglais Time To Live*) de la requête du placement d'une VNF est établi en fonction du type de la VNF pour indiquer les performances requises par type de fonctions.

Le profil défini en fonction des contraintes imposées par type de VNF peut être décrit comme suit :

$$Profil = \{latence, origine, DCs\_eligible, max\_déflexion, TTL\_VNFtype \}$$

Dans le cadre architectural NFV, pour chaque requête de placement de VNF obtenue depuis l'OSS/BSS (entité d'administration des services), l'orchestrateur NFVO (entité d'exploitation des services) récupère le profil correspondant à ce type de VNF d'une entité appelée Profil Base (entité de gestion des labels).

Cette entité Profil Base prend le type de VNF en paramètre et retourne le profil correspondant à ce type à l'orchestrateur NFVO. Une fois le profil récupéré, l'orchestrateur détermine un centre de données adapté au profil, modifie le profil avec l'information sur le centre de données déterminé. Le profil modifié est ensuite envoyé avec la requête d'installation depuis l'orchestrateur vers le VIM (entité d'administration de l'architecture virtualisée). Le VIM instancie au sein l'architecture virtualisée (NFVI) les ressources nécessaires pour le déploiement de la VNF en assurant la conformité avec les contraintes décrites dans le profil.

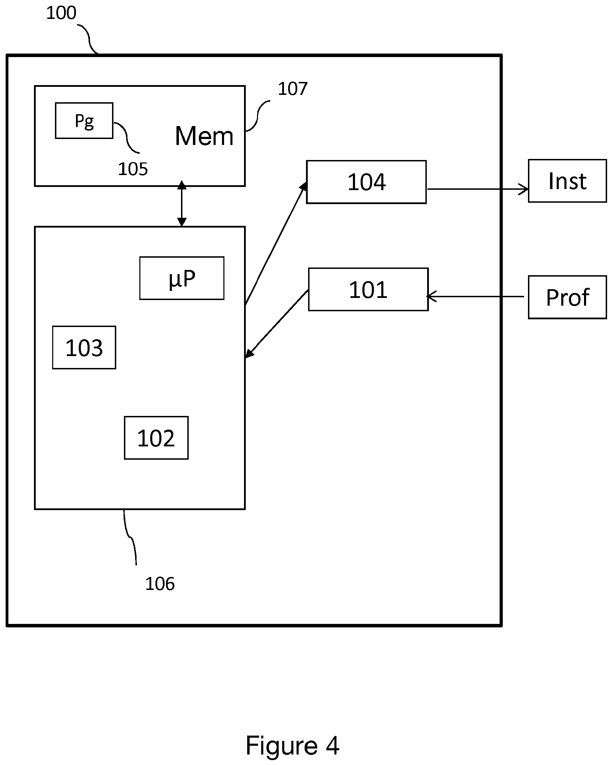

En relation avec la **figure 4,** on présente un exemple de structure d'un dispositif d'installation, selon un aspect de l'invention.

Le dispositif 100 d'installation met en oeuvre le procédé d'installation, dont différents modes de réalisation viennent d'être décrits.

Un tel dispositif 100 peut être mis en oeuvre dans une entité spécifique ou bien intégrée à une entité existante telle qu'un contrôleur SDN (en anglais *Software Defined Networks*) ou une entité NFVO.

Par exemple, le dispositif 100 comprend une unité de traitement 106, équipée par exemple d'un microprocesseur µP, et pilotée par un programme d'ordinateur 105, stocké dans une mémoire 107 et mettant en oeuvre le procédé d'installation selon l'invention. A l'initialisation, les instructions de code du programme d'ordinateur 105 sont par exemple chargées dans une mémoire RAM, avant d'être exécutées par le processeur de l'unité de traitement 106.

Un tel dispositif 100 comprend :

- Un module 101 d'obtention, destiné à obtenir un ensemble de paramètres de placement de fonction réseau virtualisée propres au type de fonction réseau virtualisée, l'ensemble étant appelé profil **Prof,** auprès d'une entité de gestion des profils,

- Un module 102 de détermination, destiné à déterminer le premier centre de données de l'ensemble en fonction du profil obtenu,

- Un module 103 de modification, apte à modifier le profil de placement par l'ajout d'une donnée d'identification du premier centre de données déterminé,

- Un émetteur 104, apte à émettre à destination d'une entité d'administration de l'architecture virtualisée une requête d'installation **Inst,** comprenant le profil modifié, de la fonction virtualisée dans le premier centre de données déterminé.

## Revendications

1. Procédé d'installation d'une fonction réseau virtualisée, contribuant à l'implémentation d'un service de communications, dans un centre de données d'un ensemble de centres (10, 20, 30) de données d'une architecture (1) virtualisée de communications, comprenant les étapes suivantes mise en oeuvre dans une entité (3) d'exploitation du service :

- Emission à destination d'une entité (4) de gestion des profils d'un message d'obtention d'un ensemble de paramètres de placement de la fonction réseau virtualisée propres au type de ladite fonction réseau virtualisée, l'ensemble étant appelé profil, ledit message comprenant un identifiant de ladite fonction virtualisée,

- Obtention (E6), en provenance de l'entité de gestion des profils, d'un profil correspondant au type de ladite fonction réseau virtualisée,
- Détermination (E7) d'un premier centre (10) de données adapté à ladite fonction réseau virtualisée à installer en fonction du profil obtenu,
- Modification (E7) du profil par l'ajout d'une donnée d'identification du premier centre (10) de données déterminé,
- Emission (E8) à destination d'une entité (5) d'administration de l'architecture (1) virtualisée d'une requête d'installation, comprenant le profil modifié, de la fonction réseau virtualisée dans le premier centre (10) de données déterminé,
- Détermination (E12) d'un deuxième centre de données de l'ensemble en fonction du profil modifié pour installer la fonction réseau virtualisée à la suite de la réception (E11), en provenance de l'entité (5) d'administration de l'architecture virtualisée, d'un message comprenant une information de non-installation de la fonction réseau virtualisée dans le premier centre (10) de données.

2. Procédé d'installation, selon la revendication 1, où l'entité (3) d'exploitation incrémente un compteur, indiquant le nombre de fois où une installation de la fonction virtualisée n'a pu être réalisée, dans le profil lors de la réception du message comprenant l'information de non-installation.

3. Procédé d'installation, selon la revendication 2, où l'entité (3) d'exploitation du service émet un message d'incident d'installation à une entité (2) d'administration des services si le compteur atteint une valeur déterminée.

4. Procédé d'installation, selon la revendication 1, où le deuxième (20) centre de données est dans la même zone géographique que le premier centre (10) de données.

5. Procédé d'installation, selon la revendication 1, où le profil de placement obtenu auprès de l'entité (4) de gestion des profils comprend une donnée de compatibilité entre le type de ladite fonction virtualisée et un autre type de fonction virtualisée.

6. Procédé d'installation, selon la revendication 1, où le profil obtenu de l'entité (4) de gestion des profils comprend un paramètre de temps indiquant la durée maximale à respecter pour l'installation de la fonction virtualisée.

7. Procédé d'installation, selon la revendication 1, où le profil obtenu de l'entité (4) de gestion des profils comprend une caractéristique relative aux capacités requises pour l'installation de la fonction virtualisée.

8. Procédé d'installation, selon la revendication 1, où la donnée d'identification du premier centre (10) de données déterminé comprend en outre une donnée d'identification de machine virtuelle sur laquelle la fonction virtualisée doit être installée.

9. Procédé d'installation, selon la revendication 1, comprenant en outre une étape de réception d'un message de déplacement de la fonction virtualisée en provenance d'une entité d'administration (5) de l'architecture (1) virtualisée, préalablement à l'étape d'obtention d'un profil de placement.

10. Dispositif d'installation d'une fonction réseau virtualisée, contribuant à l'implémentation d'un service de communications, dans un centre de données d'un ensemble de centres (10, 20, 30) de données d'une architecture (1) virtualisée de communications, mis en oeuvre dans une entité d'exploitation du service et comprenant:

- Un émetteur, apte à émettre à destination d'une entité (4) de gestion des profils un message d'obtention d'un ensemble de paramètres de placement de la fonction réseau virtualisée propres au type de ladite fonction réseau virtualisée, l'ensemble étant appelé profil, ledit message comprenant un identifiant de ladite fonction virtualisée,
- Un module d'obtention, en provenance de l'entité de gestion des profils, d'un profil correspondant au type de ladite fonction réseau virtualisée, l'ensemble étant appelé profil, auprès d'une entité (4) de gestion des profils,
- Un module de détermination, destiné à déterminer un premier centre (10) de données adapté à ladite fonction réseau virtualisée à installer en fonction du profil obtenu,
- Un module de modification, apte à modifier le profil par l'ajout d'une donnée d'identification du premier centre (10) de données déterminé,
- Un émetteur, apte à émettre à destination d'une entité (5) d'administration de l'architecture (1) virtualisée une requête d'installation, comprenant le profil modifié, de la fonction réseau virtualisée dans le premier centre (10) de données déterminé,
- Un module de détermination, apte à déterminer un deuxième centre de données de l'ensemble en fonction du profil modifié pour installer la fonction réseau virtualisée à la suite de la réception, en provenance de l'entité (5) d'administration de l'architecture virtualisée, d'un message comprenant une information de non-installation de la fonction réseau virtualisée dans le premier centre (10) de données.

11. Système d'installation d'une fonction réseau virtualisée, contribuant à l'implémentation d'un service, dans un centre de données d'un ensemble de centres (10, 20, 30) de données d'une architecture (1) virtualisée de communications, comprenant:

- Un dispositif d'installation, selon la revendication 10,
- Une entité de gestion des profils,
- Une entité (5) d'administration de l'architecture virtualisée apte à recevoir du dispositif d'installation une requête d'installation, comprenant le profil modifié, de la fonction réseau virtualisée dans un premier centre (10) de données déterminé et apte à émettre un message comprenant une information de non-installation de la fonction réseau virtualisée dans le premier centre (10) de données.

12. Programme d'ordinateur, **caractérisé en ce qu'**il comprend des instructions pour la mise en oeuvre des étapes du procédé d'installation selon la revendication 1, lorsque ce procédé est exécuté par un processeur.

13. Support d'enregistrement lisible par un système d'installation conforme à la revendication 11, sur lequel est enregistré le programme d'ordinateur selon la revendication 12.

**Patentansprüche**

1. Verfahren zur Installierung einer virtualisierten Netzwerkfunktion, die zur Implementierung eines Kommunikationsdiensts in einem Rechenzentrum einer Einheit von Rechenzentren (10, 20, 30) einer virtualisierten Kommunikationsarchitektur (1) beiträgt, das die folgenden in einer Betriebsentität (3) des Diensts durchgeführten Schritte enthält:

- Senden, an eine Managemententität (4) der Profile, einer Nachricht über den Erhalt einer Einheit von dem Typ der virtualisierte Netzwerkfunktion eigenen Platzierungsparametern der virtualisierten Netzwerkfunktion, wobei die Einheit Profil genannt wird, wobei die Nachricht eine Kennung der virtualisierten Funktion enthält,
- Erhalt (E6), von der Managemententität der Profile, eines Profils entsprechend dem Typ der virtualisierten Netzwerkfunktion,
- Bestimmung (E7) eines an die zu installierende virtualisierte Netzwerkfunktion angepassten ersten Rechenzentrums abhängig vom erhaltenen Profil,
- Änderung (E7) des Profils durch das Hinzufügen eines Identifikationsdatenwerts des bestimmten ersten Rechenzentrums (10),
- Senden (E8), an eine Verwaltungsentität (5) der virtualisierten Architektur (1), einer das geänderte Profil enthaltenden Installierungsanforderung der virtualisierten Netzwerkfunktion im bestimmten ersten Rechenzentrum (10),
- Bestimmung (E12) eines zweiten Rechenzentrums der Einheit abhängig vom geänderten Profil, um die virtualisierte Netzwerkfunktion nach dem Empfang (E11), von der Verwaltungsentität (5) der virtualisierten Architektur, einer Nachricht zu installieren, die eine Information der Nicht-Installierung der virtualisierten Netzwerkfunktion im ersten Rechenzentrum (10) enthält.

2. Installierungsverfahren nach Anspruch 1, wobei die Betriebsentität (5) einen Zähler inkrementiert, der die Häufigkeit der Fälle, bei denen eine Installierung der virtualisierten Funktion nicht durchgeführt werden konnte, in dem Profil beim Empfang der die Information der Nicht-Installierung enthaltenden Nachricht anzeigt.

3. Installierungsverfahren nach Anspruch 2, wobei die Betriebsentität (5) des Diensts eine Installierungszwischenfallnachricht an eine Verwaltungsentität (2) der Dienste sendet, wenn der Zähler einen bestimmten Wert erreicht.

4. Installierungsverfahren nach Anspruch 1, wobei das zweite Rechenzentrum (20) sich in der gleichen geographischen Zone befindet wie das erste Rechenzentrum (10) .

5. Installierungsverfahren nach Anspruch 1, wobei das bei der Managemententität (4) des Profile erhaltene Platzierungsprofil einen Kompatibilitätsdatenwert zwischen dem Typ der virtualisierten Funktion und einem anderen Typ einer virtualisierten Funktion enthält.

6. Installierungsverfahren nach Anspruch 1, wobei das von der Managemententität (4) der Profile erhaltene Profil einen Zeitparameter enthält, der die einzuhaltende maximale Dauer für die Installierung der virtualisierten Funktion anzeigt.

7. Installierungsverfahren nach Anspruch 1, wobei das von der Managemententität (4) der Profile erhaltene Profil eine Charakteristik bezüglich der für die Installierung der virtualisierten Funktion erforderlichen Kapazitäten enthält.

8. Installierungsverfahren nach Anspruch 1, wobei der Identifikationsdatenwert des bestimmten ersten Rechenzentrums (10) außerdem einen Identifikationsdatenwert einer virtuellen Maschine enthält, auf der die virtualisierte Funktion installiert werden soll.

9. Installierungsverfahren nach Anspruch 1, das außerdem vor dem Schritt des Erhalts eines Platzierungsprofils einen Schritt des Empfangs einer Verschiebungsnachricht der virtualisierten Funktion von einer Verwaltungsentität (5) der virtualisierten Architektur (1) enthält.

10. Installierungsvorrichtung einer virtualisierten Netzwerkfunktion, die zur Implementierung eines Kommunikationsdiensts in einem Rechenzentrum einer Einheit von Rechenzentren (10, 20, 30) einer virtualisierten Kommunikationsarchitektur (1) beiträgt, die in einer Betriebsentität des Diensts eingesetzt wird und enthält:

    - einen Sender, der geeignet ist, an eine Managemententität (4) der Profile einer Nachricht über den Erhalt einer Einheit von dem Typ der virtualisierten Netzwerkfunktion eigenen Platzierungsparametern der virtualisierten Netzwerkfunktion zu senden, wobei die Einheit Profil genannt wird, wobei die Nachricht eine Kennung der virtualisierten Funktion enthält,
    - ein Erhaltsmodul, von der Managemententität der Profile, eines Profils entsprechend dem Typ der virtualisierten Netzwerkfunktion, wobei die Einheit Profil genannt wird, bei einer Managemententität (4) der Profile,
    - ein Bestimmungsmodul, dazu bestimmt, abhängig vom erhaltenen Profil ein an die zu installierende virtualisierte Netzwerkfunktion angepasstes erstes Rechenzentrum (10) zu bestimmen,
    - ein Änderungsmodul, das geeignet ist, das Profil durch die Hinzufügung eines Identifikationsdatenwerts des bestimmten ersten Rechenzentrums (10) zu ändern,
    - einen Sender, der geeignet ist, eine das geänderte Profil enthaltende Installierungsanforderung der virtualisierten Netzwerkfunktion im bestimmten ersten Rechenzentrum (10) an eine Verwaltungsentität (5) der virtualisierten Architektur (1) zu senden,
    - ein Bestimmungsmodul, das geeignet ist, ein zweites Rechenzentrum der Einheit abhängig vom geänderten Profil zu bestimmen, um die virtualisierte Netzwerkfunktion nach dem Empfang einer Nachricht von der Verwaltungsentität (5) der virtualisierten Architektur zu installieren, die eine Information der Nicht-Installierung der virtualisierten Netzwerkfunktion im ersten Rechenzentrum (10) enthält.

11. Installierungssystem einer virtualisierten Netzwerkfunktion, die zur Implementierung eines Diensts in einem Rechenzentrum einer Einheit von Rechenzentren (10, 20, 30) einer virtualisierten Kommunikationsarchitektur (1) beiträgt, das enthält:

    - eine Installierungsvorrichtung nach Anspruch 10,
    - eine Managemententität der Profile,
    - eine Verwaltungsentität (5) der virtuellen Architektur, die geeignet ist, von der Installierungsvorrichtung eine das geänderte Profil enthaltende Installierungsanforderung der virtualisierten Netzwerkfunktion in einem bestimmten ersten Rechenzentrum (10) zu empfangen, und geeignet ist, eine Nachricht zu senden, die eine Information der Nicht-Installierung der virtualisierten Netzwerkfunktion im ersten Rechenzentrum (10) enthält.

12. Computerprogramm, **dadurch gekennzeichnet, dass** es Anweisungen zur Durchführung der Schritte des Installierungsverfahrens nach Anspruch 1 enthält, wenn dieses Verfahren von einem Prozessor ausgeführt wird.

13. Speicherträger, der von einem Installierungssystem nach Anspruch 11 lesbar ist, auf dem das Computerprogramm nach Anspruch 12 gespeichert ist.

**Claims**

1. Method for installing a virtualized network function, contributing to the implementation of a communication service, in a data centre of a set of data centres (10, 20, 30) of a virtualized communication architecture (1), comprising the following steps implemented in an entity (3) for operating the service:

    - sending to an entity (4) for managing profiles a message to obtain a set of placement parameters of the virtualized network function that are specific to the type of said virtualized network function, the set being called a profile, said message containing an identifier of said virtualized function,
    - obtaining (E6), from the entity for managing profiles, a profile corresponding to the type of said virtualized network function,
    - determining (E7) a first data centre (10) suitable for said virtualized network function to be installed depending on the obtained profile,
    - modifying (E7) the profile by adding a datum identifying the determined first data centre (10),
    - sending (E8) to an entity (5) for administrating the virtualized architecture (1) a request, comprising the modified profile, for installation of the virtualized network function in the determined first data centre (10),
    - determining (E12) a second data centre of the set depending on the modified profile with a view to installing the virtualized network function, following reception (E11), from the entity (5) for administrating the virtualized architecture, of a message containing information on non-installation of the virtualized network function in the first data centre (10).

2. Installing method according to Claim 1, wherein the operating entity (3) increments a counter, indicating the number of times an installation of the virtualized function has not been able to be achieved, in the profile on reception of the message containing the non-installation information.

3. Installing method according to Claim 2, wherein the entity (3) for operating the service sends an installation incident message to an entity (2) for administrating services if the counter reaches a set value.

4. Installing method according to Claim 1, wherein the second (20) data centre is in the same geographic region as the first data centre (10).

5. Installing method according to Claim 1, wherein the placement profile obtained from the entity (4) for managing profiles comprises a datum on compatibility between the type of said virtualized function and another type of virtualized function.

6. Installing method according to Claim 1, wherein the profile obtained from the entity (4) for managing profiles comprises a time parameter indicating the maximum duration to be respected for the installation of the virtualized function.

7. Installing method according to Claim 1, wherein the profile obtained from the entity (4) for managing profiles comprises a characteristic relative to the capacities required for the installation of the virtualized function.

8. Installing method according to Claim 1, wherein the datum identifying the determined first data centre (10) furthermore comprises a datum identifying the virtual machine on which the virtualized function must be installed.

9. Installing method according to Claim 1, furthermore comprising a step of receiving a message of movement of the virtualized function from an entity (5) administrating the virtualized architecture (1), prior to the step of obtaining a placement profile.

10. Device for installing a virtualized network function, contributing to the implementation of a communication service, in a data centre of a set of data centres (10, 20, 30) of a virtualized communication architecture (1), implemented in an entity for operating the service and comprising:

    - a sender, able to send to an entity (4) for managing profiles a message to obtain a set of placement parameters of the virtualized network function that are specific to the type of said virtualized network function, the set being called a profile, said message containing an identifier of said virtualized function,
    - a module for obtaining, from the entity for managing profiles, a profile corresponding to the type of said virtualized network function, the set being called a profile, from an entity (4) for managing profiles,
    - a determining module, intended to determine a first data centre (10) suitable for said virtualized network function to be installed depending on the obtained profile,
- a modifying module, able to modify the profile by adding a datum identifying the determined first data centre (10),
- a sender, able to send to an entity (5) for administrating the virtualized architecture (1) a request, comprising the modified profile, for installation of the virtualized network function in the determined first data centre (10),
- a determining module, able to determine a second data centre of the set depending on the modified profile with a view to installing the virtualized network function, following reception, from the entity (5) for administrating the virtualized architecture, of a message containing information on non-installation of the virtualized network function in the first data centre (10).

11. System for installing a virtualized network function, contributing to the implementation of a service, in a data centre of a set of data centres (10, 20, 30) of a virtualized communication architecture (1), comprising:

- an installing device, according to Claim 10,
- an entity for managing profiles,
- an entity (5) for administrating the virtualized architecture able to receive, from the installing device, a request, comprising the modified profile, for installation of the virtualized network function in a determined first data centre (10) and able to send a message containing information on non-installation of the virtualized network function in the first data centre (10).

12. Computer program, **characterized in that** it contains instructions for implementing the steps of the installing method according to Claim 1, when this method is executed by a processor.

13. Storage medium that is readable by an installing system according to Claim 11, on which is stored the computer program according to Claim 12.

Figure 1

Figure 2

Figure 3

Figure 4

**RÉFÉRENCES CITÉES DANS LA DESCRIPTION**

**Documents brevets cités dans la description**

- WO 2017002921 A1

**Littérature non-brevet citée dans la description**

- On orchestrating virtual network functions. *Network and Service Management (CNSM), 2015 11th International Conférence,* 50-56
- CLOSE: A Costless Service Offloading Strategy for Distributed Edge Cloud. *GTCC 2017-IEEE Workshop on Game Theory in Computer Communications*
- Network Functions Virtualisation (NFV) Release 2. *Management and Orchestration; Network Service Templates Specification, http://www.etsi.org/deliver/etsi_gs/NFV-IFA/001_099/014/02.01.01_60/gs_NFV-IFA014v020101p.pdf - date:10/2016*
- **FARAH SLIM et al.** *Towards a dynamic adaptive placement of virtual network functions under ONAP,* 06 Novembre 2017, 210-215